# EUROPÄISCHE PATENTSCHRIFT

(11) **EP 0 406 252 B1**
(45) Veröffentlichungstag und Bekanntmachung des Hinweises auf die Patenterteilung: **05.05.1993**
(21) Anmeldenummer: 89902373.3
(22) Anmeldetag: 23.02.1989
(51) Int. Cl.: G01N 27/416, F02D 41/14

(54) **SENSORELEMENT FÜR GRENZSTROMSENSOREN ZUR BESTIMMUNG DES $g(l)-WERTES VON GASGEMISCHEN**
ELEMENT FOR LIMIT-CURRENT SENSORS FOR DETERMINING THE $g(l) VALUE OF A GAS MIXTURE
ELEMENT CAPTEUR DE COURANT LIMITE SERVANT A DETERMINER LA VALEUR $g(l) DE MELANGES GAZEUX

(30) Priorität: 18.03.1988 DE 3809154
(43) Veröffentlichungstag der Anmeldung: 09.01.1991
(73) Patentinhaber: ROBERT BOSCH GMBH, 70442 Stuttgart (DE)
(72) Erfinder: FRIESE, Karl-Hermann, D-7250 Leonberg (DE); HOETZEL, Gerhard, D-7000 Stuttgart 50 (DE)
(86) Internationale Anmeldenummer: DE8900102
(87) Internationale Veröffentlichungsnummer: WO8908840

(56) Entgegenhaltungen:
- EP-A- 0 142 993
- EP-A- 0 188 900
- EP-A- 0 194 082
- DE-A- 2 913 633
- DE-A- 3 543 759
- US-A- 4 657 659

## Beschreibung

### Stand der Technik

Die Erfindung geht aus von einem Sensorelement für Grenzstromsensoren nach der Gattung des Hauptanspruchs. Bei derartigen Sensorelementen, die nach dem Diffusionsgrenzstromprinzip arbeiten, wird der Diffusionsgrenzstrom bei einer konstanten, an den beiden Elektroden des Sensorelementes anliegenden Spannung gemessen. Dieser Strom ist in einem bei Verbrennungsvorgängen entstehenden Abgas von der Sauerstoffkonzentration solange abhängig, wie die Diffusion des Gases zur Pumpelektrode die Geschwindigkeit der ablaufenden Reaktion bestimmt. Es ist bekannt, derartige, nach dem polarographischen Meßprinzip arbeitende Sensoren in der Weise aufzubauen, daß sowohl Anode als auch Kathode dem zu messenden Gas ausgesetzt sind, wobei die Kathode eine Diffusionsbarriere aufweist, um ein Arbeiten im Diffusionsgrenzstrombereich zu erzielen.

Die bekannten Grenzstromsensoren dienen in der Regel zur Bestimmung des λ-Wertes von Gasgemischen, der das Verhältnis "Gesamtsauerstoff/zur vollständigen Verbrennung des Kraftstoffs benötigten Sauerstoff" des in einem Zylinder verbrennenden Luft/Kraftstoffgemisches bezeichnet, wobei die Sensoren den Sauerstoffgehalt des Abgases über eine elektrochemische Pumpstrommessung ermitteln.

Aufgrund einer vereinfachten und kostengünstigen Herstellungsweise hat sich in der Praxis in den letzten Jahren die Herstellung von in Keramikfolien- und Siebdrucktechnik herstellbaren Sensorelementen durchgesetzt.

In einfacher und rationeller Weise lassen sich planare Sensorelemente ausgehend von plättchen- oder folienförmigen sauerstoffleitenden Festeleketrolyten, z.B. aus stabilisiertem Zirkondioxid, herstellen, die beidseitig mit je einer inneren und äußeren Pumpelektrode mit dazugehörigen Leiterbahnen beschichtet werden. Die innere Pumpelektrode befindet sich dabei in vorteilhafter Weise im Randbereich eines Diffusionskanals, durch den das Meßgas zugeführt wird, und der als Gasdiffusionswiderstand dient.

Aus der DE-OS 35 43 759 sowie den EP-A 0 142 993, 0 188 900 und 0 194 082 sind ferner Sensorelemente und Detektoren bekannt, denen gemein ist, daß sie jeweils eine Pumpzelle und eine Sensorzelle aufweisen, die aus plättchen- oder folienförmigen sauerstoffleitenden Festelektrolyten und zwei hierauf angeordneten Elektroden bestehen und einen gemeinsamen Diffusionskanal aufweisen.

Der aus der DE-OS 35 43 759 bekannte, in Planartechnik aufgebaute Breitbandsensor, weist eine Pumpzelle und eine parallel dazu angeordnete Konzentrationszelle auf, die einen dazwischenliegenden Diffusionskanal begrenzen. Für die Elektroden werden Schichtdicken von etwa 20 µm angegeben, gegenüber etwa 0,1 mm für den Diffusionskanal. Die Elektroden, somit auch die innere Pumpelektrode, sind also dünn im Vergleich zum Diffusionskanal.

Der beschriebene Breitbandsensor funktioniert in bekannter Weise, indem der durch die Pumpzelle fließende Strom so geregelt wird, daß die Spannung über der Konzentrationszelle konstant ist. Der über die Pumpzelle fließende Strom liefert das Ausgangssignal.

Die EP-A 0 141 993 beschreibt mehrere Varianten von Planarsonden zur Sauerstoffmessung, darunter auch eine Ausführungsform mit Pumpzelle und Konzentrationszelle, wobei jeweils eine innere Elektrode der Pumpzelle und eine Elektrode der Konzentrationszelle in einem Diffusionskanal für das Meßgas angeordnet sind. Wie aus den Abbildungen ersichtlich ist jedoch die Elektrodenschichtdicke klein im Vergleich zur Höhe des Diffusionskanals.

Nachteilig an Sensorelementen nach der Gattung des Hauptanspruchs ist, daß der vordere, dem zugeführten Meßgas zugewandte Teil der inneren Pumpelektrode stärker als der hintere, dem zugeführten Meßgas abgewandte Teil der Pumpelektrode beansprucht wird. Dies führt zu einer hohen Elektrodenpolarisation, die eine hohe Pumpspannung erfordert. Letztere wiederum birgt die Gefahr einer Elektrolytzersetzung im Bereich der inneren Pumpelektrode in sich.

In der DE-A 37 28 618 veröffentlicht aus 4.8.88 wird daher vorgeschlagen, in einem Sensorelement für Grenzstromsensoren zur Bestimmung des λ-Wertes von Gasgemischen mit auf einem 0²⁻-Ionen leitenden plättchen- oder folienförmigen Festelektrolyten angeordneten äußeren und inneren Pumpelektroden, von denen die innere Pumpelektrode auf dem plättchen- oder folienförmigen Festelektrolyten in einem Diffusionskanal für das Meßgas angeordnet ist, sowie mit Leiterbahnen für die Pumpelektroden, in dem Diffusionskanal auf der der inneren Pumpelektrode gegenüberliegenden Seite mindestens eine zweite innere Pumpelektrode anzuordnen, die mit der ersten inneren Pumpelektrode kurzgeschlossen ist.

### Vorteile der Erfindung

Das erfindungsgemäße Sensorelement mit den kennzeichnenden Merkmalen des Hauptanspruchs hat demgegenüber den Vorteil, daß durch die besondere Ausgestaltung der inneren Pumpelektrode infolge ihrer größeren Elektrodenfläche ihre Belastbarkeit erhöht und die Lebensdauer des Sensorelementes verbessert wird. Ein weiterer Vorteil ergibt sich daraus, daß die innere Pumpelektrode bei der Herstellung des Sensorelementes in Keramikfolien- und Siebdrucktechnik beim Laminieren und Pressen eine Stützfunktion übernimmt.

Das erfindungsgemäße Sensorelement läßt sich anstelle bekannter Sensorelemente planarer Struktur in Grenzstromsensoren üblicher Bauart verwenden. In Frage kommen dabei Breitbandsensoren (λ ≷ 1) und Magersensoren (λ > 1). Das erfindungsgemäße Sensorelement kann somit allein als Pumpzelle gegebenenfalls mit einem Heizelement, ausgebildet sein, z. B. als Magersensor für Dieselmotoren, und als solches in ein übliches Sensorgehäuse, z. B. des aus den DE-OS 32 06 903 und 35 37 051 bekannten Typs eingebaut und zur Messung des Kraftstoff-Luft-Verhältnisses in einem mageren Abgas verwendet werden. Das erfindungsgemäße Sensorelement kann jedoch auch außer der Pumpzelle zusätzlich noch eine Sensorzelle (Nernstzelle) aufweisen, die mit einem zusätzlichen Luftreferenzkanal versehen ist und deren eine Elektrode im Bereich der Pumpelektrode im Diffusionskanal der Pumpzelle angeordnet ist und deren andere Elektrode sich im Luftreferenzkanal befindet und zur Messung des Kraftstoff-Luft-Verhältnisses in einem mageren oder fetten Abgas verwendet werden.

### Zeichnung

In der Zeichnung sind vorteilhafte Ausführungsformen erfindungsgemäßer Sensorelemente dargestellt.

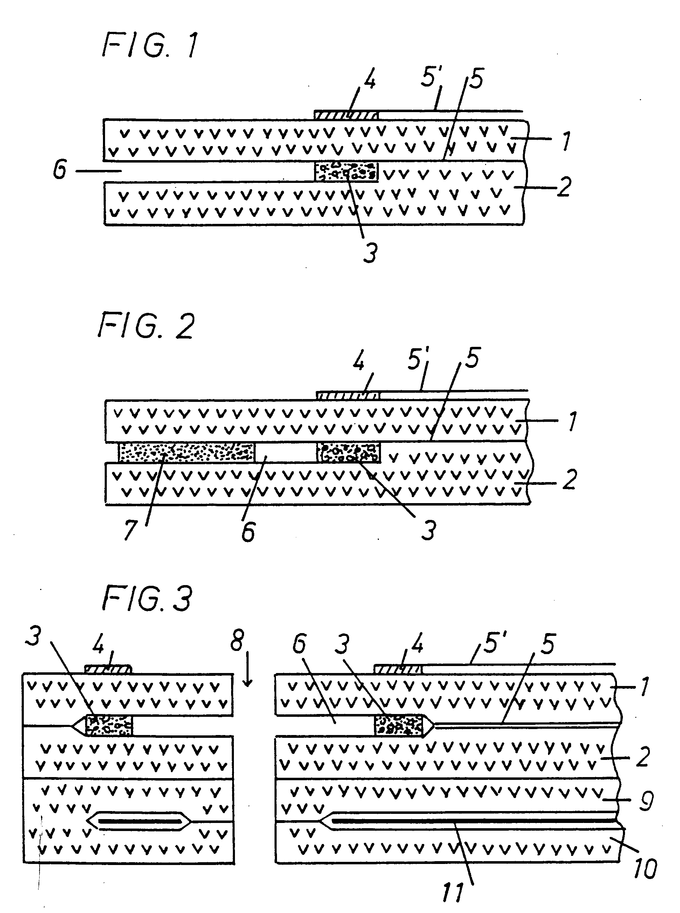

Fig. 1 ist eine schematische, stark vergrößerte Darstellung eines Schnitts durch ein in Keramikfolien- und Siebdrucktechnik herstellbares Sensorelement nach der Erfindung, Es besteht im wesentlichen aus den Keramikfolien 1 und 2, auf die nach dem Siebdruckverfahren die innere dreidimensionale Pumpelektrode 3 sowie die äußere Pumpelektrode 4 nebst dazugehörigen Leiterbahnen 5, 5' aufgedruckt worden sind und die unter Ausbildung des einen Tunnel bildenden Diffusionskanals 6 mittels eines üblichen interlaminaren Binders zusammenlaminiert sind. In vorteilhafter Weise sind die äußere Pumpelektrode 4 und die dazugehörige Leiterbahn 5' mit einer nicht dargestellten porösen Deckschicht, z. B. aus Mg-Spinell, abgedeckt.

Das in Fig. 2 schematisch dargestellte Sensorelement unterscheidet sich von dem in Fig. 1 dargestellten Sensorelement lediglich dadurch, daß in dem Diffusionskanal 6 eine poröse Füllung 7 vorgesehen ist, die als Diffusionsbarriere für das Meßgas dient.

Fig. 3 ist eine weitere schematische, stark vergrößerte Darstellung eines Schnitts durch eine andere in Keramikfolien- und Siebdrucktechnik herstellbare, vorteilhafte Ausführungsform eines Sensorelementes nach der Erfindung, bei dem die innere dreidimensionale Pumpelektrode 3 sowie die äußere Pumpelektrode 4 ringförmig um die Meßgaszuführung 8 angeordnet sind. Es besteht im wesentlichen aus vier zusammenlaminierten Festelektrolytfolien 1, 2, 9 und 10 mit der ausgestanzten Meßgaszuführung 8, der ringförmigen äußeren Pumpelektrode 4 und der dreidimensionalen, im Diffusionskanal 6 angeordneten inneren Pumpelektrode 3. Im Falle der in Fig. 3 dargestellten Ausführungsform weist das Sensorelement ferner einen Heizer 11 auf. Die Folien 9 und 10 mit den Heizer sind jedoch nicht zwingend erforderlich. Die ringförmigen Elektroden 3 und 4 sind an Leiterbahnen 5 und 5' angeschlossen, die gegenüber den Festelektrolytfolien mittels in der Zeichnung nicht dargestellter Isolierschichten, z. B. Al₂O₃-Schichten, isoliert sind. Die Leiterbahnen sind an eine nicht dargestellte Spannungsquelle angeschlossen, z. B. eine Batterie mit einer konstanten Arbeitsspannung im Bereich von 0,5 bis 1,0 Volt. In vorteilhafter Weise sind die äußere Pumpelektrode 4 und die dazugehörige Leiterbahn 5' wiederum mit einer nicht dargestellten porösen Deckschicht, z. B. aus Magnesium-Spinell, abgedeckt.

Zur Herstellung erfindungsgemäßer Sensorelemente geeignete sauerstoffionenleitende Festelektrolyte sind insbesondere solche auf Basis von ZrO₂, HfO₂, CeO₂ und ThO₂. Als besonders vorteilhaft hat sich die Verwendung von Plättchen und Folien aus mit Yttrium stabilisiertem Zirkoniumdioxid (YSZ) erwiesen.

Die Plättchen und Folien haben dabei vorzugsweise eine Dicke von 0,25 bis 0,3 mm.

Die äußere Pumpelektrode 4 besteht vorzugsweise aus einem Metall der Platingruupe, insbesondere Platin, oder aus Legierungen von Metallen der Platingruppe oder Legierungen von Metallen der Platingruppe mit anderen Metallen. Die Elektrode kann gegebenenfalls auch ein keramisches Stützgerüstmaterial, wie es auch zur Erzeugung der inneren Pumpelektrode verwendet wird, enthalten. Im Gegensatz zu der hier als "dreidimensional" bezeichneten inneren Pumpelektrode 3 stellt die äußere Pumpelektrode 4 jedoch eher eine mehr flächige zweidimensionale Elektrode, d. h. eine Elektrode üblichen Typs dar, die in der Regel dünner als die innere Pumpelektrode ist und vorzugsweise eine Dicke von 8 bis 15 µm aufweist.

Die innere, dreidimensionale Pumpelektrode 3 besteht vorzugsweise aus einer Mischung aus einem Metall der Platingruppe, insbesondere Platin, oder aus einer Legierung, wie sie auch zur Erzeugung der äußeren Pumpelektrode verwendet werden kann, und einem Stützgerüstmaterial, wie z. B. mit Y₂O₃ stabilisiertem Zirkondioxid. Gegebenenfalls kann das Metall der Platingruppe ganz oder teilweise durch ein elektronenleitendes Metall bzw. Metalloxid, wie z. B. TiO₂ oder Perovskite, oder durch ein gemischtleitendes (d. h. elektroden- und ionenleitendes)Metalloxid, wie z. B. CeO₂ oder andere Oxide der seltenen Erden sowie Mischoxide wie z. B. Uran-Scandium-Oxide, ersetzt werden. Der Volumenanteil an Stützgerüstmaterial liegt zweckmäßig bei 20 bis 60 %, vorzugsweise bei 35 bis 45 %. Als vorteilhaft hat es sich ferner erwiesen, wenn der Porositätsgrad der inneren Pumpelektrode bei 10 bis 40 % liegt. Mindestens ein Teil der Poren weist dabei vorzugsweise einen Porendurchmesser von größer als 1 µm auf. Der mittlere Porendurchmesser der inneren Pumpelektrode liegt dabei vorzugsweise bei 2 bis 10 µm. Das poröse Stützgerüst läßt sich dabei durch Einsatz bekannter Porenbildnerpulver erzeugen, die der zur Erzeugung der Elektrode verwendeten Mischung aus Metallkomponente und Stützgerüstkomponente sowie anderen üblichen Zusätzen zugesetzt werden und bei der Herstellung des Sensorelementes verbrannt oder verdampft werden.Typische Porenbildner, die mit Erfolg eingesetzt werden können, sind z. B. Theobromin und Ruß sowie Carbonate. Die Porengröße des Stützgerüstes läßt sich dabei durch die Teilchengröße des eingesetzten Porenbildnerpulvers steuern. Die Verwendnung von Porenbildnern ist jedoch nicht unbedingt erforderlich Vielmehr ist es beispielsweise auch möglich, ein poröses Stützgerüst durch Verwendung eines Stützgerüstmaterials mit vergleichsweise geringer Sinteraktivität zu erzeugen. Die zur Erzeugung der Elektroden verwendeten Massen lassen sich nach üblichen bekannten Methoden zubereiten und auf die plättchen- oder folienförmigen Festelektrolyten aufbringen, vorzugsweise aufdrucken.

Die innere dreidimensionale Pumpelektrode 3 liegt der äußeren Pumpelektrode 4 vorzugsweise direkt gegenüber. Sie kann die gleiche, eine kleinere oder größere Fläche des Festelektrolyten bedecken als die äußere Pumpelektrode 4. Die innere Pumpelektrode 3 kann dementsprechend nur einen vergleichsweise kleinen Teil des Diffusionskanals 6 oder einen vergleichsweise großen Teil des Diffusionskanals 6 ausfüllen.

Gemäß einer besonders vorteilhaften Ausgestaltung der Erfindung nimmt die innere Pumpelektrode 3 nur einen Teil des Raumes des Diffusionskanals 6 ein und im Diffusionskanal 6 ist vor der inneren Pumpelektrode 3 eine Diffusionsbarriere 7 angeordnet, wie es beispielsweise in Fig. 2 schematisch dargestellt ist.

Eine solche Diffusionsbarriere besteht aus einem porösen Material, d. h. einem Material, das bei der Sintertemperatur des Substrates, z. B. ZrO-Substrates, noch nicht dicht sintert, z. B. aus grobkörnigem ZrO₂, Mg-Spinell oder Al₂O₃ mit einer Korngröße von beispielsweise etwa 10 µm. Zur Ausbildung einer ausreichenden Porosität können gegebenenfalls Porenbildner zugesetzt werden, z. B. Thermalrußpulver, das beim Sinterprozeß ausbrennt, Theobromin oder Ammoniumcarbonat. Gemäß einer besonders vorteilhaften Ausgestaltung der Erfindung kann vor der inneren Pumpelektrode 3 ein als Diffusionsbarriere für das Meßgas wirkendes Kanalsystem für eine Mischdiffusion aus Knudsen- und Gasphasendiffusion angeordnet sein. Dieses Kanalsystem kann z. B. aus porös gefüllten Diffusionskanälen für eine Knudsendiffusion und hohlen Kanälen für eine Gasphasendiffusion bestehen. Derartige als Diffusionsbarrieren für das Meßgas wirkende Kanalsysteme werden näher in der DE-OS 37 28 289 beschrieben.

In vorteilhafter Weise kann die Diffusionsbarriere zum Zwecke der Verbesserung der Meßgenauigkeit Platin oder eine Platinlegierung oder ein anderes katalytisch wirkendes Metall enthalten, um eine Gleichgewichtseinstellung des in den Diffusionskanal gelangenden Gases zu erreichen. Der Volumenanteil an katalytisch wirkendem Metall oder Metallegierung kann bei 10 bis 90 % liegen. Die Diffusionsbarriere kann den gesamten, von der inneren Pumpelektrode 3 freigelassenen Raum des Diffusionskanals einnehmen oder nur einen Teil desselben. So kann beispielsweise auch zwischen der inneren Pumpelektrode 3 und der Diffusionsbarriere 7 ein freier Raum verbleiben. Die Diffusionsbarriere 7 läßt sich wie die innere Pumpelektrode 3 in vorteilhafter Weise in Dickschichttechnik erzeugen.

Die zu den Pumpelektroden 3 und 4 gehörenden Leiterbahnen 5 und 5' bestehen vorzugsweise ebenfalls aus Platin oder einer Platinlegierung. Pumpelektroden und Leiterbahnen können mittels bekannter Verfahren auf den Festelektrolytkörper aufgebracht werden, beispielsweise durch Siebdrucken. Zwischen der die äußere Pumpelektrode mit einer in der Zeichnung nicht dargestellten Spannungsquelle verbindenden Leiterbahn und dem Festelektrolytträger befindet sich in der Regel eine Isolationsschicht, z. B. aus Al₂O₃. Sie kann beispielsweise eine Stärke von etwa 15 µm haben. Vorzugsweise ist die innere Leiterbahn auf ähnliche Weise von Festelektrolytträger isoliert. Die Vereinigung der einzelnen, das Sensorelement bildenden Folien oder Plättchen kann mittels eines in der Keramikfolien- und Siebdrucktechnik üblichen Verfahrens erfolgen, bei dem die Folien zusammengeführt und auf Temperaturen von etwa 100 ^{o}C erhitzt werden. Dabei kann gleichzeitig der Diffusionskanal vorbereitet werden. In vorteilhafter Weise wird dieser in Dickschichttechnik eingebracht, beispielsweise durch eine Theobrominsiebdruckschicht, wobei das Theobromin beim späteren Sinterprozeß verdampft wird. Zur Erzeugung des Diffusionskanals ebenfalls verwendbar sind beispielsweise Thermalrußpulver, die beim Sinterprozeß ausbrennen oder Ammoniumcarbonat, das verdampft.

Soll der Diffusionskanal eine poröse Diffusionsbarriere aufweisen, so kann beispielsweise anstelle einer Theobrominsiebdruckschicht eine Schicht aus Theobromin oder einem anderen verdampf- oder verbrennbaren Material und einem Material, das bei der angewandten Sintertemperatur des Festelektrolytsubstrates noch nicht dicht sintert, z. B. grobkörniges ZrO₂, Magnesiumspinell oder Al₂O₃ mit einer Korngröße von z. B. 10 µm verwendet werden.

### Beispiel

Zur Herstellung eines Sensorelementes des in Fig. 3 schematisch dargestellten Typs wurden Folien aus mit Yttrium stabilisiertem Zirkondioxid einer Schichtstärke von 0,3 mm verwendet. Das Aufbringen der aus Platin bestehenden äußeren Pumpelektrode 4 und der inneren Platin-Stützgerüstelektrode 3 auf die Trägerfolien erfolgte in bekannter Siebdrucktechnik, wobei auf die die äußere Punpelektrode 4 tragende Oberfläche der Trägerfolie 1 im Bereich der Leiterbahn 5' der äußeren Pumpelektrode 4 zuvor eine etwa 20 µm dicke Al₂O₃-Isolationsschicht aufgetragen wurde. Mit entsprechenden Isolationsschichten wurde ferner die Leiterbahn 5 isoliert. Die ringförmigen Pumpelektroden 3 und 4 hatten einen Außendurchmesser von 2,8 mm und einen Innendurchmesser von 1,4 mm bei einer Dicke der äußeren Pumpelektrode von 12 µm und der inneren Pumpelektrode von 40 µm. Die innere Pumpelektrode wurde ausgehend von einer Siebdruckmasse erzeugt, die der zur Erzeugung der äußeren Pumpelektrode verwendeten Masse entsprach mit dem Unterschied, daß sie eine solche Menge an mit Y₂O₃ stabilisiertem ZrO₂ enthielt, daß ein Elektroden-Porositätsgrad von etwa 30 % erzielt wurde. Die Leiterbahnen wurden ausgehend von einer üblichen Pt-Cermetpaste aus 85 Gew.-Teilen Pt-Pulver und 15 Gew.-Teilen YSZ-Pulver erzeugt. Der Diffusionskanal 6 wurde in Dickschichttechnik durch eine Theobromin-Siebdruckschicht eingebracht, wobei das Theobromin beim späteren Sinterprozeß im Temperaturbereich um 300 ^{o}C unter Hinerlassen eines etwa 30 µm hohen und 1,3 mm tiefen Ringspaltes verdampft wurde. Die zentrale Meßgaszufuhröffnung hatte einen Durchmesser von 0,25 mm. Nach dem Bedrucken der Trägerfolien, d. h. nach Aufbringen der Elektroden, Leiterbahnen, Isolierschichten sowie gegebenenfalls einer Deckschicht auf die äußere Pumpelektrode wurden die Folien nach Zusammenfügen einem Sinterprozeß unterworfen, bei dem sie etwa 3 Stunden lang auf eine Temperatur im Bereich von 1380 ^{o}C erhitzt wurden.

Zur Herstellung eines weiteren Sensorelementes mit einem Heizer, wie in Fig. 3 schematisch dargestellt, wurden vor dem Erhitzen weitere Folien mit einem aufgedruckten Heizer zulaminiert.

Die hergestellten Sensorelemente wurden im Sensorgehäuse des aus den DE-OS 32 06 903 und 35 37 051 bekannten Typs eingebaut und zur Messung des Kraftstoff-Luft-Verhältnisses in mageren und fetten Abgasen verwendet.

## Patentansprüche

1. Sensorelement für Grenzstromsensoren zur Bestimmung des Lambda-Wertes von Gasgemischen, insbesondere von Abgasen von Verbrennungsmotoren, das auf einem 0²⁻-ionenleitenden plättchen- oder folienförmigen Festelektrolyten (1) mindestens eine äußere Pumpelektrode (4) und mindestens eine innere Pumpelektrode (3), von denen die innere Pumpelektrode (3) auf dem plättchen- oder folienförmigen Festelektrolyten (1) in einem Diffusionskanal (6) für das Meßgas angeordnet ist, sowie Leiterbahnen (5, 5') für die Pumpelektroden aufweist, dadurch gekennzeichnet, daß die im Diffusionskanal (6) angeordnete innere Pumpelektrode (3) aus einer dreidimensionalen, porösen, ein Stützgerüst aufweisenden Elektrode aus Edelmetall und/oder Metalloxid mit einer der Höhe des Diffusionskanals (6) entsprechenden Dicke besteht.

2. Sensorelement nach Anspruch 1, dadurch gekennzeichnet, daß die Höhe des Diffusionskanals und damit die Dicke der inneren Pumpelektrode 30 bis 100 µm beträgt.

3. Sensorelement nach Anspruch 1, dadurch gekennzeichnet, daß die innere Pumpelektrode (3) aus einer ein Stützgerüst aufweisenden dreidimensionalen Platinelektrode besteht.

4. Sensorelement nach Anspruch 3, dadurch gekennzeichnet, daß das in der Elektrode befindliche Platin ganz oder teilweise durch ein elektronenleitendes und/oder durch ein gemischtleitendes (d. h. elektronen- und ionenleitendes) Metall bzw. Metalloxid ersetzt ist.

5. Sensorelement nach einem der Ansprüche 1 bis 4, dadurch gekennzeichnet, daß die innere Pumpelektrode einen Porositätsgrad von 10 bis 40 % aufweist.

6. Sensorelement nach einem der Ansprüche 1 bis 5, dadurch gekennzeichnet, daß der mittlere Porendurchmesser der inneren Pumpelektrode bei 2 bis 10 µm liegt.

7. Sensorelement nach einem der Ansprüche 1 bis 6, dadurch gekennzeichnet, daß vor der im Diffusionskanal (6) angeordneten inneren dreidimensionalen Pumpelektrode (3) eine poröse Diffusionsbarriere (7) angeordnet ist.

8. Sensorelement nach Anspruch 7, dadurch gekennzeichnet, daß die poröse Diffusionsbarriere (7) zur Gleichgewichtseinstellung des in den Diffusionskanal gelangenden Gasgemisches ein Edelmetall, insbesondere Platin, enthält.

9. Sensorelement nach einem der Ansprüche 1 bis 8, dadurch gekennzeichnet, daß das Sensorelement in Keramikfolien- und Siebdrucktechnik hergestellt ist.

10. Sensorelement nach einem der Ansprüche 1 bis 9, dadurch gekennzeichnet, daß die äußere Pumpelektrode (4) und die innere Pumpelektrode (3) ringförmig um die Meßgaszuführung (8) angeordnet sind.

11. Sensorelement nach Ansprüchen 7 und 8, dadurch gekennzeichnet, daß die Diffusionsbarriere (7) ein Kanalsystem für eine Mischdiffusion aus Knudsen- und Gasphasendiffusion aufweist.

## Claims

1. Sensor element for limiting current sensors for determining the lambda value of gas mixtures, in particular of exhaust gases of internal-combustion engines, which sensor element has on a solid electrolyte (1) conducting O²⁻ ions and in platelet or sheet form at least one outer pumping electrode (4) and at least one inner pumping electrode (3), of which the inner pumping electrode (3) is arranged on the solid electrolyte (1) in platelet or sheet form in a diffusion channel (6) for the gas to be measured, as well as conductor tracks (5, 5') for the pumping electrodes, characterised in that the inner pumping electrode (3), arranged in the diffusion channel (6), comprises a three-dimensional, porous electrode of precious metal and/or metal oxide, having a supporting framework and with a thickness corresponding to the height of the diffusion channel (6).

2. Sensor element according to Claim 1, characterised in that the height of the diffusion channel, and consequently the thickness of the inner pumping electrode, is 30 to 100 µm.

3. Sensor element according to Claim 1, characterised in that the inner pumping electrode (3) comprises a three-dimensional platinum electrode having a supporting framework.

4. Sensor element according to Claim 3, characterised in that the platinum in the electrode is substituted completely or partially by an electron-conducting metal or metal oxide and/or by a mixed-conducting (i.e electron- and ion-conducting) metal or metal oxide.

5. Sensor element according to one of Claims 1 to 4, characterised in that the inner pumping electrode has a degree of porosity of 10 to 40%.

6. Sensor element according to one of Claims 1 to 5, characterised in that the average pore diameter of the inner pumping electrode is around 2 to 10 µm.

7. Sensor element according to one of Claims 1 to 6, characterised in that a porous diffusion barrier (7) is arranged ahead of the inner three-dimensional pumping electrode (3) arranged in the diffusion channel (6).

8. Sensor element according to Claim 7, characterised in that, for equilibrium adjustment of the gas mixture passing into the diffusion channel, the porous diffusion barrier (7) contains a precious metal, in particular platinum.

9. Sensor element according to one of Claims 1 to 8, characterised in that the sensor element is produced by the ceramic-sheet and screen-printing technique.

10. Sensor element according to one of Claims 1 to 9, characterised in that the outer pumping electrode (4) and the inner pumping electrode (3) are arranged annularly around the feed (8) for the gas to be measured.

11. Sensor element according to Claims 7 and 8, characterised in that the diffusion barrier (7) has a system of channels for a mixed diffusion of Knudsen and gas-phase diffusion.

## Revendications

1. Elément capteur pour capteurs de courant limite servant à déterminer la valeur λ de mélanges de gaz en particulier de gaz d'échappement de moteurs à combustion, qui présente, sur un électrolyte solide (1) conduisant les ions O²⁻ et ayant la forme de plaquettes ou de couches, au moins une électrode extérieure de pompe (4) et au moins une électrode intérieure de pompe (3), dont l'électrode intérieure de pompe (3) est disposée sur l'électrolyte solide (1) en forme de plaquettes ou de couches dans un canal de diffusion (6) pour les gaz de mesure, ainsi que des pistes conductrices (5, 5') pour les électrodes de pompe, élément capteur caractérisé en ce que l'électrode inférieure de pompe (3) disposée dans le canal de diffusion (6) consiste en une électrode tridimensionnelle, poreuse, présentant un cadre support, électrode en un métal noble et/ou un oxyde métallique ayant une épaisseur correspondant à la hauteur du canal de diffusion (6).

2. Elément capteur selon la revendication 1, caractérisé en ce que la hauteur du canal de diffusion et de cette façon l'épaisseur de l'électrode intérieure de pompe atteint 30 à 100 x 10⁻⁶ m.

3. Elément capteur selon la revendication 1, caractérisé en ce que l'électrode intérieure de pompe (3) consiste en une électrode de platine tridimensionnelle présentant un cadre support.

4. Elément capteur selon la revendication 3, caractérisé en ce que la platine se trouvant dans l'électrode est remplacé en tout ou en partie par un métal ou un oxyde métallique conduisant les électrons et/ou par un métal en un oxyde métallique à conduction mixte (c'est-à-dire conduisant les électrons et les ions).

5. Elément capteur selon l'une des revendications 1 à 4, caractérisé en ce que l'électrode intérieure de pompe présente un degré de porosité compris entre 10 et 40 %.

6. Elément capteur selon l'une des revendications 1 à 5, caractérisé en ce que le diamètre moyen des pores de l'électrode intérieure de pompe est compris entre 2 et 10 x 10⁻⁶ m.

7. Elément capteur selon l'une des revendications 1 à 6, caractérisé en ce qu'avant l'électrode intérieure tridimensionnelle de pompe (3) disposés dans le canal de diffusion (6) on dispose une barrière poreuse de diffusion (7).

8. Elément capteur selon la revendication 7, caractérisé en ce que la barrière poreuse de diffusion (7) contient un métal noble, en particulier du platine, pour établir un équilibre du mélange gazeux arrivant dans le canal de diffusion.

9. Elément capteur selon les revendications 1 à 8, caractérisé en ce que l'élément capteur est fabriqué selon la technique des couches céramiques et la technique sérigraphique.

10. Elément capteur selon l'une des revendications 1 à 9, caractérisé en ce que l'électrode extérieure de pompe (4) et l'électrode intérieure de pompe (3) ont une forme annulaire et sont disposées autour de l'arrière des gaz de mesure (8).

11. Elément capteur selon la revendication 7 et la revendication 8, caractérisé en ce que la barrière de diffusion (7) présente un système de canaux pour une diffusion mixte composée d'une diffusion en régime intermédiaire et une diffusion en phase gazeuse.
